# EUROPÄISCHE PATENTSCHRIFT

(11) **EP 1 310 523 B1**
(45) Veröffentlichungstag und Bekanntmachung des Hinweises auf die Patenterteilung: **17.05.2006**
(21) Anmeldenummer: 02023422.5
(22) Anmeldetag: 19.10.2002
(51) Int. Cl.: C08L 51/08, C08F 255/02, C08K 5/00, C08K 3/00, C08L 51/06, C08F 230/08

(54) **Vewendung einer vernetzen Polyolefinzusammensetzung zur Herstellung von Schrumpfschläuchen**
Use of a crosslinked polyolefin composition for the production of heat-schrinkable tubings
Utilisation de compositions polyoléfiniques réticulées pour la production de tubes thermorétractables

(30) Priorität: 05.11.2001 DE 10154302
(43) Veröffentlichungstag der Anmeldung: 14.05.2003
(73) Patentinhaber: REHAU AG + Co, 95111 Rehau (DE)
(72) Erfinder: Udo, Steffl, 95111 Rehau (DE); Rhönisch, Thomas, 95111 Rehau (DE)

(56) Entgegenhaltungen:
- EP-A- 0 584 927
- EP-A- 1 170 114
- EP-A- 1 170 116
- WO-A-95/29197
- WO-A-98/21251
- DATABASE WPI Section Ch, Week 199928 Derwent Publications Ltd., London, GB; Class A17, AN 1999-330011 XP002253805 & JP 11 106601 A (NIPPON UNICAR CO LTD), 20. April 1999 (1999-04-20)

## Beschreibung

Die vorliegende Erfindung betrifft die Verwendung einer vernetzten, wärmeschrumpfbaren Polyolefinzusammensetzung zur Herstellung von Schrumpfschtäuchen.

Derartige Wärmeschrumpfartikel, wie Schrumpfschläuche oder Schrumpfkappen, werden aus einer Vielzahl von Polymerwerkstoffen hergestellt und dabei sowohl Thermoplaste, als auch Elastomere und thermoplastische Elastomere eingesetzt.
Im Bereich der Thermoplaste wird, nach wie vor, neben geringen Mengen Fluorkunststoffen vor allem Polyvinylchlorid eingesetzt. Im Bereich der Elastomere sind vernetzte Polyolefin-Homo- und Copolymere in Verwendung.

Die Vernetzung der Polyolefine kann nach verschiedenen chemischen, aber auch physikalischen Methoden erfolgen. Beispielsweise beschreibt H. U. Vogt in seinem Artikel "Über das Vernetzen von Polyolefinen" in der Zeitschrift Kautschuk, Gummi, Kunststoff, 34. Jahrgang, Nr. 3/1981, Seite 197 ff, dass bei den technisch bedeutsamen Vernetzungstechnologien zwischen Strahlenvernetzung, Peroxidvernetzung und Silanvernetzung zu unterscheiden ist.

Letztgenanntes Verfahren unterscheidet sich von den anderen Vernetzungsmethoden vor allem durch die Prozesstechnik. Es werden in einem Primärschritt zunächst Polymerkettenradikale mit Hilfe üblicher Radikalinitiatoren erzeugt. An diese reaktiven Stellen addieren sich Silanmoleküle über ihre Vinylfunktion. Die silangepfropften Polymere befinden sich hier noch im thermoplastischen Zustand. Die eigentliche Vernetzung findet dann nach der Formgebung durch eine Silankondensationsreaktion mittels Feuchtigkeit statt.
Diese Vernetzungstechnik ist in der US 3.646.155 beschrieben.

GB 1526398 lehrt, dass, in einer Verfahrensvariante, alle Additive inkl. Katalysator, in einen speziell ausgelegten Extruder dosiert werden, hier das Silan auf das Polymer aufgepfropft und das Gemisch schließlich zum Formteil verarbeitet wird.

In EP 0426073 ist ein Trocken-Silan-Batch für ein Einstufenverfahren beschrieben, bei dem ein poröses Trägermaterial die flüssige Silanmischung aufnimmt.

Die Schrift WO-A-9529197 lehrt, welche Eigenschaften ein Ethylen-Polymer aufweist, welches für vernetzbare, im wesentlichen lineare Ethylen-Polymere, gepfropft mit einem Silan-Vernetzer eingesetzt wird, woraus Kabelisolationen, Fensterdichtungen und Fasern hergestellt werden können

Die Schrift WO-A-9821251 offenbart Polyolefin-Artikel, die aus einem Silan-gepfropften Olefin-Copolymerharz bestehen. Diese können in kompakter oder geschäumter Form als Kabelisolation und Wasser- / Abwasserrohr genutzt werden.

Die Schrift EP-A-0584927 nennt eine thermoplastische Zusammensetzung, die aus einem Ethylen-Polymer oder einem davon abgeleiteten Polymer besteht, weiter aus einer Hilfs-Polymerkomponente und aus einem Feuchtigkeits-Vernetzungs-Additiv, das ein Silan enthält, einem Katalysator und einem Radikalbildner.
Diese vernetzt schnell und kann als Kabelbeschichtung eingesetzt werden.

Die Schrift 1999-330011 (JP(A) 11106601) lehrt eine thermoplastische Zusammensetzung, bei der das Reaktionsprodukt aus einem ungesättigtem Alkoxysilan und einem organischen Peroxid, erhitzt in einem Extruder zusammen mit einem geradkettigen Ethylen-alpha-Olefin-Copolymer niedriger Dichte, in Form eines gepfropften Ethylen-alpha-Olefin-Copolymer erhalten wird. Die Zusammensetzung kann als Kabelisolation, Schläuche für Wasser, Gas, Abwasser und als Verpackungsfolie in der Landwirtschaft eingesetzt werden.

Schließlich offenbaren die Schriften EP-A-1170114 und EP-A-1170116 feuchtigkeitsvernetzbare Schrumpfartikel und feuchtigkeitsvernetzbare Profile aus Polyolefinmischungen.

Vorteilhaft für die Silanvernetzung gegenüber der Strahlenvernetzung ist die homogenere Verteilung der Vernetzungsstellen in Folge der Schmelzedispergierung der Silanmoleküle, weiterhin die geringeren Investitions- und Energiekosten, beispielsweise durch Wegfall der Strahlenschutzvorkehrungen. Vorteilhaft an der Silanvernetzung sind aber auch die erhöhte Alterungsbeständigkeit und die verbesserten mechanischen Eigenschaften.

Als Alternative zum Silanpfropfungsverfahren können die Vinylsilane auch im Hochdruckreaktor einpolymerisiert werden, wie US 441.306.6 beschreibt.
Eine Anwendung solcher Silan-Co- oder Terpolymere in Wärmeschrumpfartikeln ist jedoch sehr ungünstig. Da hier der Gelgehalt < 70 % sein muss, ist es erforderlich, mit unmodifizierten Polymeren rückzuverdünnen. Dieses führt aus Kompatibilitätsgründen zu schlechten mechanischen Eigenschaften, wie der Reißfestigkeit und der Weiterreißfestigkeit, welche sich sowohl bei der Aufweitung als auch im fertigen Schrumpfartikel negativ auf die Schrumpffestigkeit auswirken.

Die hier beschriebenen Silantechnologien haben inzwischen Bedeutung bei der Fertigung von Kunststoffrohren aus vernetztem Niederdruckpolyethylen (HDPE) gefunden sowie, wie von B. E. Roberts und S. Verne in Proc. Golden Jubilee Conf. "Polyethylenes 1933-1983", London, UK, Juni 1983, Institute of Materials, Paper C3-1-1, beschrieben, zur Ummantelung von Kabeln aus Hochdruckpolyethylen und "linear low dencity polyethylen" (LLDPE). Dabei handelt es sich in der Regel um wenig flexible bis steife, hochkristalline Basismaterialien.

US 3.086.242 beschreibt die Verwendung von vernetzten Polyolefinen auf Basis LDPE und Poly(ethen-co-vinylacetat) als Material für wärmeschrumpfende Artikel.
Nachteilig an diesem Verfahren ist jedoch, dass bei der Silanpfropfung des Poly(ethen-co-vinylacetats) abgespaltete Essigsäuremoleküle als Kondensationskatalysatoren wirken und daher zu einer Vorvernetzung und damit zur Ausbildung einer unruhigen Oberfläche führen. Auch die Vortrocknung des Poly(ethen-co-vinylacetats) gestaltet sich auf Grund der Polarität als schwierig.
Somit ist mit den beim Stand der Technik verwendeten Poly(ethen-co-vinylacetaten) mit einer erhöhten Feuchtigkeitsabsorption zu rechnen. Somit ist der Oberflächenausfall der nach dem Stand der Technik hergestellten Schrumpfartikel in der Regel nicht akzeptabel.

Vernetzte Polyolefine auf Basis LDPE weisen nicht die gewünschte Flexibilität für Schrumpfartikel auf. Ein niedrig schrumpfender Schrumpfartikel mit Schrumpfbeginn < 100°C ist auf Basis LDPE nicht realisierbar.

Zusätzlich weisen die im Stand der Technik eingesetzten Rohmaterialien für silangepfropfte Wärmeschrumpfartikel auf Basis LDPE und/oder Poly(ethen-co-vinylacetat) auf Grund der hohen Kristallinität lange Vernetzungszeiten im Klimaraum oder im Wasserbad auf und erfordern durch die breite Molmassenverteilung eine hohe Silan-Peroxid-Dosierung zur Erreichung des gewünschten Vernetzungsgrades. Dies führt zu einer unwirtschaftlichen Herstellung, sowohl des Materials, als auch des Schrumpfartikels.

Aufgabe der vorliegenden Erfindung ist es daher, einen flexiblen, vernetzten, wärmeschrumpfbaren Artikel bereitzustellen, der über eine hohe Oberflächenqualität verfügt, eine Schrumpftemperatur < 100°C aufweist, kostengünstig herstellbar ist durch kurze Vernetzungszeiten und eine wesentlich geringere Dosierung des teueren Silan-Peroxidgemisches und der im Schrumpfschlauch eine Wanddickenexzentrizität zwischen 10 und 25 % ermöglicht.

Erfindungsgemäß gelingt die Lösung der Aufgabe durch Verwendung eines Artikels mit den in Anspruch 1 beschriebenen Merkmalen. Bevorzugte Weiterbildungen bzw. Ausführungen sind in den Unteransprüchen aufgeführt.

Die verwendeten Polyolefine mit einer Molgewichtsverteilung M_{w} : Mₙ zwischen 1,5 und 3,5, einem Schmelzindex > 3,0 g/10min, sowie einem Schmelzpunkt < 100° sind Polyolefine, die nach einem, dem Fachmann bekannten speziellen Polymerisationsverfahren unter Verwendung der sog. Metallocen-Katalysatoren hergestellt werden.

Auf Grund ihrer im Vergleich zu konventionell hergestellten Ethylen-α-Olefin-Copolymeren sehr engen Molgewichtsverteilung und des stark unterschiedlichen Flieiverhaltens weisen diese Polyolefine eine Reihe von Besonderheiten in ihren Werkstoffeigenschaften auf. Dadurch unterscheiden sie sich von herkömmlichen LDPE-Polymeren erheblich in ihren Eigenschaften, sowie in ihrem Verhalten bei der Compoundierung und der Verarbeitung.

In Folge dieser Besonderheiten ist ihre Verwendung für die Herstellung von wärmeschrumpfbaren Artikeln nicht naheliegend.

Erst die gezielte Auswahl spezieller Typen und die darauf angepasste Verfahrenstechnik erlaubt die Herstellung nicht nur von wärmeschrumpfenden Artikeln mit üblichem Eigenschaftsbild, sondern führen sogar überraschenderweise zu einem überlegenen Eigenschaftsbild, wie es in der Aufgabenstellung formuliert ist.

Es ist bei der verwendeten Polyolefinzusammensetzung vorteilhaft, wenn die Polyolefinmischung neben dem Ethylen-α-Olefin-Copolymeren herkömmliche kristalline Polyolefine, vorzugsweise Polypropylen und/oder Niederdruckpolyethylen zwischen 0 und 30 Gewichtsteilen, bezogen auf 100 Gewichtsteile Ethylen-α-Olefin-Copolymer enthält.

Bevorzugte Komponenten (B) Calciumcarbonate, Aluminium- oder Magnesiumhydroxide, Calciumsulfate, Silikate, Kieselsäuren, Ruße, Graphite und/oder halogenhaltige organische Flammschutzmittel wie Deca-, Octa-, Pentabromdiphenylether, Hexabromdiphenoxyethan, Tetrabromphthalsäureanhydrid, Tetrabromphthalsäurediole und -polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonat-oligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-di-carboximid), Dibromethyldibromcyclohexan, Dibromneopentylglykol und/oder chlorierte cycloaliphatische Verbindungen wie Dechlorane Plus oder HET-Säure. Erfindungsgemäße Komponenten (B) sind auch synergistische Kombinationen aus den aufgezählten halogenhaltigen Verbindungen mit Antimonverbindungen wie Diantimontrioxid. Bevorzugte gewichtsprozentuale Anteile der Komponenten (B) in der Mischung von (A) und (B) sind 0 bis 400 Gew.-%. Ganz bevorzugte gewichtsprozentuale Anteile der Komponenten (B) in der Mischung von (A) und (B) sind 30 bis 60 Gew.-%.

Vernetzte, wärmeschrumpfbare Artikel lassen sich dadurch herstellen dass auf das Polymermaterial aus den Komponenten (A) und (B) ein Organosilan der allgemeinen Formel RSiX₃ unter Zugabe eines organischen Peroxids aufgepfropft, anschließend der Schrumpfartikel ausgeformt und mittels Feuchtigkeit vernetzt wird.

Von Vorteil ist bei der verwendeten Polyolefinzusammmensetzung, wenn die radikal bildende Komponente ausgewählt ist aus der Gruppe Acylperoxid, Ketonperoxid, Hydroperoxid, Peroxocarbonat, Perester, Peroxoketal und/oder Peroxooligomere, insbesondere aus der Gruppe Alkylperoxid.

Dabei ist von besonderem Vorteil, wenn die radikal bildende Komponente eine Azoverbindung ist.

Bevorzugte Organosilane der allgemeinen Formel RSiX₃ sind Vinyltrimethoxysilan, Vinyltriethoxysilan oder Gamma-(meth)acryloxypropyltrimethoxysilan, bevorzugte radikalerzeugende Komponenten sind organische Alkylperoxide mit Halbwertszeiten von 0.1 h bei Temperaturen > 80°C, insbesondere 2,5-Dimethyl-2,5-di(tertbutylperoxo)hexan und/oder 2,5-Dimethyl-2,5-di(tertbutylperoxo)3-hexin und/oder Di(tertbutyl)peroxid und/oder 1,3-Di(tertbutylperoxoisopropyl) benzol und/oder Dicumylperoxid und/oder Tertbutylcumylperoxid.

Durch erfindungsgemäße Verwendung der Polymerzusammensetzung in den vernetzten Artikeln können die bei der Verarbeitung und Silanpfropfung der im Stand der Technik beschriebenen Poly(ethen-co-vinylacetate) Schwierigkeiten vermieden werden. Zum einen weisen die unpolaren, über Metallocenkatalyse hergestellten Polyolefine einen wesentlich geringeren Restfeuchtegehalt auf, zum anderen findet keine Abspaltung von Essigsäuremolekülen auf Grund der thermischen Zersetzung im Extruder statt.
Beides würde zu einer vorzeitigen Kondensation der aufgepfropften Alkoxysilangruppen führen und äußert sich im extrudierten und danach aufgeweiteten Schrumpfartikel in Form von Stippen oder Gelpartikeln an der Oberfläche.

Verbunden mit den niedrigen Schmelzpunkten der verwendeten Polymerzusammensetzung in den vernetzten Artikeln können die Eigenschaften flexibel, niedrigschrumpfend oder schnellschrumpfend - wie sie von vielen Anwendern aus wirtschaftlichen und energetischen Gründen gefordert werden - eingestellt und variiert werden.
Die enge Molmassenverteilung der mittels Metallocenkatalyse hergestellten Polyolefine führt zu hohen Vernetzungsgraden bei reduziertem Silanverbrauch im Vergleich zu den bisher verwendeten Poly(ethen-co-vinylacetaten) und LD-Polyethylenen.

Weiterhin kann die Vernetzungszeit drastisch erniedrigt werden. Auf Grund der geringen Kristallinität gegenüber Poly(ethen-co-vinylacetaten) läuft auch die diffusionskontrollierte Hydrolyse- und Kondensationsreaktion der Alkoxysilane wesentlich schneller ab.

Bei Verwendung der im Hochdruckreaktor hergestellten Silan-Co- und Terpolymere als Polymermaterial für vernetzbare Artikel muss zur Erzielung eines bestimmten Gelgehaltes im Bereich < 70 % mit unmodifizierten Polymeren rückverdünnt werden.

Gemäß des der vorliegenden Erfindung zugrunde liegenden Gedankens ist es vorteilhaft, wenn der Gelgehalt der vernetzten, wärmeschrumpfbaren Polyolefinzusammensetzung im Bereich zwischen 1 und 90 %, vorzugsweise zwischen 20 und 80 % liegt.

Dies führt aus Kompatibilitätsgründen zu verschlechterten mechanischen Eigenschaften, insbesondere bei der Weiterreißfestigkeit. Die vernetzte Zusammensetzung weist wesentlich verbesserte mechanische Kennwerte auf, welche die Parameter und Freiheitsgrade bei der Aufweitung der Schrumpfartikel erheblich erweitern.
So können in den vernetzten wärmeschrumpfbaren Artikeln auf Grund der homogeneren Vernetzung Wanddickenexzentrizitäten im Schrumpfschlauch zwischen 10 und 25 % nach dem Aufweiten durch ein beliebiges Aufweitverfahren mühelos erreicht werden.

Die in dieser Erfindung beschriebenen vernetzten wärmeschrumpfbaren Artikel weisen gegenüber den bekannten Artikeln aus vernetzbaren Poly(ethen-co-vinylacetaten) und LDPE darüber hinaus eine beschleunigte Flammschutz- und/oder Füllstoffaufnahme und eine beim Brand reduzierte Rauchgasentwicklung auf.

Der Polyolefinzusammensetzung in den vernetzten Artikeln können eine Reihe weiterer Verbindungen zugesetzt werden, z. B. Gleit- oder Verarbeitungsmittel, Nukleierungsmittel, Stabilisatoren, Antistatika, Prozessöle, Pigmente oder Treibmittel.

Erfindungsgemäß kann die Polyolefinzusammensetzung durch die Zugabe von 0 - 100 Gewichtsteilen an Zusätzen, bezogen auf die Summe der Komponenten A und B, in Form von 0 - 5 Gewichtsteilen Gleit- oder Verarbeitungsmittel, 0 - 2 Gewichtsteilen Nukleierungsmittel, 0 - 1 Gewichtsteile Stabilisatoren, 0 - 2 Gewichtsteilen Antistatika, 0 - 100 Gewichtsteilen Prozessöl, 0 - 5 Gewichtsteilen Pigmente und oder 0 - 3 Gewichtsteilen Treibmittel ergänzt werden.

Als besonders vorteilhaft hat sich bei der vorliegenden Erfindung herausgestellt, wenn die Zugabe eines Katalysators oder eines Katalysatorgemisches zur Beschleunigung der Vernetzungsreaktion erfolgt, wobei der Katalysator ausgewählt ist aus der Gruppe Dibutylzinndilaurat, Dibutylzinnoxid, Zinnoctoat, Dibutylzinnmaleat oder Titanylacetonat.

Günstig ist bei der vorliegenden Erfindung der Umstand, dass bei der Herstellung eines Schrumpfschlauches die Pfropfungsreaktion der Polyolefinzusammensetzung mit dem Silan einerseits, und die Formgebung andererseits in einem Verarbeitungsschritt erfolgt, wobei ein Einschneckenextruder mit Barriereschnecke als Verarbeitungsaggregat zum Einsatz kommt.

Unter die vernetzten, wärmeschrumpfbaren Artikel fallen universell einsetzbare, flammwidrige Schrumpfschläuche, Schrumpfschläuche für Bauteile mit extrem unterschiedlichen Durchmessern und Schrumpfraten im Verhältnis 3 : 1, selbstverlöschende Schrumpfschläuche, Schrumpfschläuche in beliebigen Farben, Schrumpfschläuche für Bauteile mit engen Radien, halogenfreie Schrumpfschläuche, Schrumpfschläuche mit Schrumpfbeginn < 60°C, Schrumpfschläuche mit Kleberbeschichtung, abriebfeste Schrumpfschläuche und Schrumpfkappen für die Isolation, Schutz und Kennzeichnung stromführender Teile, zur Herstellung von Kondensatoren, Widerständen, Haltestangen, Gurtpeitschen, Überzüge für Leuchtstoffröhren und zum Abbau elektrostatischer Ladungen.

In den folgenden Beispielen wird die vorliegende Erfindung verdeutlicht:

### Beispiele 1-3:

In einem Einschneckenextruder mit Barriereschnecke; einem UD-Verhältnis von 30; Dosiereinrichtung für das flüssige Silan/Peroxid/Katalysator-Gemisch; Temperaturprofil 140/160/170/180/200/220/240/280, werden über die Dosierwaage das entsprechende Polyolefin (siehe Tabelle) und der Füllstoff dosiert. Die Mischung wird aufgeschmolzen und in den Extruder das flüssige Silan/Peroxid/Katalysator-Gemisch eindosiert und zum Grundschlauch ausgeformt.

### Beispiel 4:

In einem Einschneckenextruder mit Barriereschnecke; einem UD-Verhältnis von 30; Dosiereinrichtung für das flüssige Silan/Peroxid/Katalysator-Gemisch; abgewandeltes Temperaturprofil 140/160/170/180/200/200/200/220 , werden über die Dosierwaage das entsprechende Polyolefin (siehe Tabelle) und der Füllstoff dosiert. Die Mischung wird aufgeschmolzen und in den Extruder das flüssige Silan/Peroxid/Katalysator-Gemisch eindosiert und zum Grundschlauch ausgeformt.

Die Zusammensetzungen sind in Gewichtsteilen (T) der einzelnen Komponenten angegeben und betragen in den folgenden Beispielen 1-4:

### Beispiele

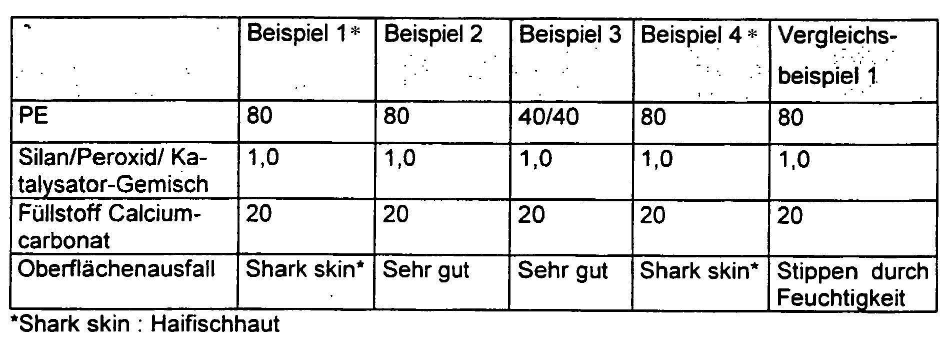

Silan/Peroxid/Katalysator-Gemisch: Silcat R-HE von Fa Crompton OSi Group
- PE in Beispiel 1:: Metallocen-Polyolefin mit Schmelzindex 1.0 g/10 min bei 190°C/2.16 kg und 0,885 g/cm³
- PE in Beispiel 2:: Metallocen-Polyolefin mit Schmelzindex 3.0 g/10 min bei 190°C/2.16 kg und 0,875 g/cm³
- PE in Beispiel 3:: Polymerblend aus 40 T Metallocen-Polyolefin mit Schmelzindex 1.0 g/10 min bei 190°C/2.16 kg und 0,885 g/cm³ und 40 T Metallocen-Polyolefin mit Schmelzindex 18.0 g/10 min bei 190°C/2.16 kg und 0,880 g/cm³
- PE in Beispiel 4:: Metallocen-Polyolefin mit Schmelzindex 2.5 g/10 min bei 190°C/2.16 kg und 0,885 g/cm³
- PE in Vergleichsbeispiel 1:: Poly(ethen-co-vinylacetat) mit Schmelzindex 7.0 g/10 min bei 230°C/2.16 kg und 28% Vinylacetatgehalt.

Mechanische Eigenschaften der erfindungsgemäßen vernetzten Zusammensetzungen im Vergleich zum Stand der Technik:

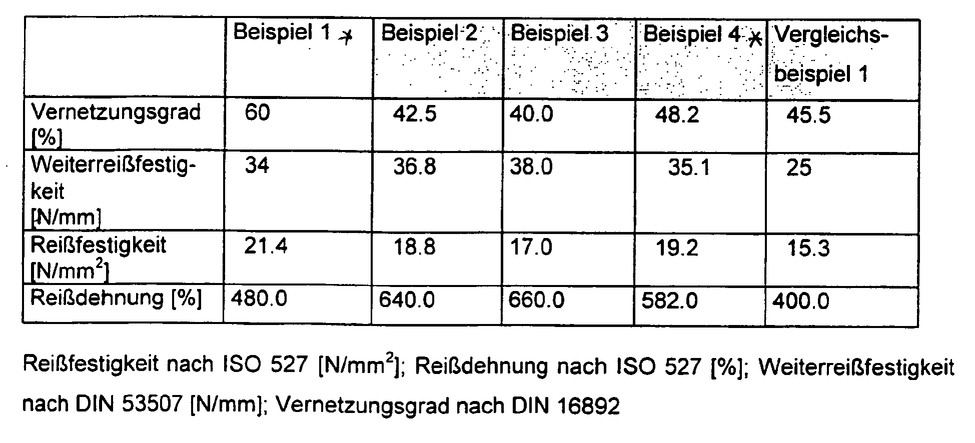

## Patentansprüche

1. Verwendung einer vernetzten, wärmeschrumpfbaren Polyolefinzusammensetzung, die mindestens aus den folgenden zwei Komponenten besteht:
(I) 100 Gewichtsteile einer Komponente (A), bestehend aus einer silangepfropften Polyolefinmischung, wobei mindestens ein Mischungsbestandteil davon ein Ethylen-α-Olefin-Copolymer mit mehr als drei C-Atomen ist, dessen Schmelzindex > 3,0 g pro 10 min bei 190°C / 2,16 kg ist, dessen Molgewichtsverteilung M_{w}/Mₙ zwischen 1,5 und 3,5 liegt und dessen Schmelzpunkt kleiner als 100°C ist,
(II) 0 - 400 Gewichtsteile einer Komponente (B), bestehend aus einem oder mehreren anorganischen Füllstoffen und/oder halogenhaltigen Flammschutzmitteln und/oder synergistischen Flammschutzmitteln aus Antimon- und Halogenverbindungen,
zur Herstellung von Schrumpfschläuchen.

2. Verwendung einer Polyolefinzusammensetzung gemäß Anspruch 1, **dadurch gekennzeichnet, dass** das Ethylen-α-Olefin-Copolymere mit mehr als drei C-Atomen mittels Metallocen-Katalyse hergestellt wurde.

3. Verwendung einer Polyolefinzusammensetzung gemäß Anspruch 1, **dadurch gekennzeichnet, dass** die Polyolefinmischung neben dem Ethylen-α-Olefin-Copolymeren herkömmliche kristalline Polyolefine, vorzugsweise Polypropylen und/oder Niederdruckpolyethylen zwischen 0 und 30 Gewichtsteilen, bezogen auf 100 Gewichtsteile Ethylen-α-Olefin-Copolymer enthält.

4. Verwendung einer Polyolefinzusammensetzung gemäß Anspruch 1, **dadurch gekennzeichnet, dass** die Komponente (B) ausgewählt ist aus der Gruppe Calciumcarbonate, Aluminium- oder Magnesiumhydroxide, Calciumsulfate, Silikate, Kieselsäuren, Ruße, Graphite und/oder halogenhaltige organische Flammschutzmittel wie Deca-, Octa-, Pentabromdiphenylether, Hexabromdiphenoxyethan, Tetrabromphthalsäureanhydrid, Tetrabromphthalsäurediole und -polyether, Ethylenbistetrabromphthalimid, Tetrabrombisphenol A (TBBA), TBBA-bis(2,3-dibrompropylether), TBBA-bis(2-hydroxyethylether), TBBA-bis(allylether), TBBA-bis(2-ethyletheracrylat), TBBA-Carbonatoligomere, bromierte Epoxidharze auf Basis TBBA, Poly(dibromphenylether), Poly(pentabrombenzylacrylat), Poly(tribromstyrol), Hexabromcyclododecan, Ethylen-bis(dibromnorbonan-dicarboximid), Dibromethyldibromcyclohexan, Dibromneopentylglykol und/oder chlorierte cycloaliphatische Verbindungen wie Dechlorane Plus oder HET-Säure und/oder synergistische Kombinationen aus den aufgezählten halogenhaltigen Verbindungen mit Antimonverbindungen wie Diantimontrioxid.

5. Verwendung einer Polyolefinzusammensetzung gemäß Anspruch 1, **dadurch gekennzeichnet, dass** die silangepfropfte Polyolefinmischung in der Schmelze durch Reaktion von organischen Silanen der allgemeinen Formel RSiX₃ mit der Polyolefinmischung in der Gegenwart von radikal bildenden Komponenten erzeugt wird, wobei R ein polyolefinisch ungesättigter Kohlenwasserstoffrest und X eine hydrolysierbare organische Gruppe ist.

6. Verwendung einer Polyolefinzusammensetzung gemäß Anspruch 5, **dadurch gekennzeichnet, dass** das organische Silan der allgemeinen Formel RSiX₃ ausgewählt ist aus der Gruppe Vinyltrimethoxysilan, Vinyltriethoxysilan oder Gamma-(meth)acryloxypropyltrimethoxysilan.

7. Verwendung einer Polyolefinzusammensetzung gemäß Anspruch 5, **dadurch gekennzeichnet, dass** die radikal bildende Komponente ausgewählt ist aus der Gruppe Acylperoxid, Ketonperoxid, Hydroperoxid, Peroxocarbonat, Perester, Peroxoketal und/oder Peroxooligomere, insbesondere aus der Gruppe Alkylperoxid.

8. Verwendung einer Polyolefinzusammensetzung gemäß Anspruch 5, **dadurch gekennzeichnet, dass** die radikal bildende Komponente eine Azoverbindung ist.

9. Verwendung einer Polyolefinzusammensetzung gemäß Anspruch 5, **dadurch gekennzeichnet, dass** die radikal bildende Komponente ein organisches Alkylperoxid ist, das eine Halbwertszeit von 0,1 Std bei Temperaturen > 80° aufweist.

10. Verwendung einer Polyolefinzusammensetzung gemäß Anspruch 9, **dadurch gekennzeichnet, dass** das organische Alkylperoxid ausgewählt ist aus der Gruppe 2,5-Dimethyl-2,5-di(tertbutylperoxo)hexan und/oder 2,5-Dimethyl-2,5-di(tert-butylperoxo)3-hexin und/oder Di(tertbutyl)peroxid und/oder 1,3-Di(tertbutylperoxoisopropyl)benzol und/oder Dicumylperoxid und/oder Tertbutylcumylperoxid ist.

11. Verwendung einer Polyolefinzusammensetzung gemäß Anspruch 1, **dadurch gekennzeichnet, dass** der Gelgehalt der vernetzten, wärmeschrumpfbaren Polyolefinzusammensetzung im Bereich zwischen 1 und 90 %, vorzugsweise zwischen 20 und 80 % liegt.

12. Verwendung einer Polyolefinzusammensetzung nach einem der vorhergehenden Ansprüche, **dadurch gekennzeichnet, dass** die Zugabe von 0 - 100 Gewichtsteilen an Zusätzen, bezogen auf die Summe der Komponenten A und B, in Form von 0 - 5 Gewichtsteilen Gleit- oder Verarbeitungsmittel, 0 - 2 Gewichtsteilen Nukleierungsmittel, 0 - 1 Gewichtsteile Stabilisatoren, 0 - 2 Gewichtsteilen Antistatika, 0 - 100 Gewichtsteilen Prozessöl, 0 - 5 Gewichtsteilen Pigmente und/oder 0 - 3 Gewichtsteilen Treibmittel erfolgt.

13. Verwendung einer Polyolefinzusammensetzung nach einem der vorhergehenden Ansprüche, **dadurch gekennzeichnet, dass** die Zugabe eines Katalysators oder eines Katalysatorgemisches zur Beschleunigung der Vernetzungsreaktion erfolgt.

14. Verwendung einer Polyolefinzusammensetzung gemäß Anspruch 13, **dadurch gekennzeichnet, dass** der Katalysator ausgewählt ist aus der Gruppe Dibutylzinndilaurat, Dibutylzinnoxid, Zinnoctoat, Dibutylzinnmaleat oder Titanylacetonat.

15. Verwendung einer Polyolefinzusammensetzung nach einem der vorhergehenden Ansprüche, **dadurch gekennzeichnet, dass** die Pfropfungsreaktion der Polyolefinzusammensetzung mit dem Silan einerseits, und die Formgebung andererseits in einem Verarbeitungsschritt erfolgt, wobei ein Einschneckenextruder mit Barriereschnecke als Verarbeitungsaggregat zum Einsatz kommt.

16. Verwendung einer Polyolefinzusammensetzung nach einem der vorigen Ansprüche zur Herstellung von Schrumpfschläuchen, insbesondere solchen mit flammwidriger Ausrüstung, mit Kleberbeschichtungen, mit einem Schrumpfbeginn < 60 °C, für Bauteile mit extrem unterschiedlichen Durchmessern, für Schrumpfschläuche mit hoher Abriebfestigkeit und der Möglichkeit der Ableitung elektrostatischer Ladungen zum Einsatz insbesondere in der Elektroindustrie, im Maschinenbau und im Werkzeugbau und im Bauwesen.

## Claims

1. Use of a crosslinked, heat-shrinkable polyolefin composition which comprises at least the following two components:
(i) 100 parts by weight of a component (A) comprising a silane-grafted polyolefin mixture of which at least one constituent is an ethylene-α-olefin copolymer having more than three carbon atoms whose melt index is > 3.0 g per 10 min at 190°C/2.16 kg, whose molecular weight distribution M_{w}/Mₙ is in the range from 1.5 to 3.5 and whose melting point is less than 100°C,
(ii) 0 - 400 parts by weight of a component (B) comprising one or more inorganic fillers and/or halogen-containing flame retardants and/or synergistic flame retardants composed of antimony and halogen compounds,
for producing heat-shrinkable tubing.

2. Use of a polyolefin composition according to Claim 1, **characterized in that** the ethylene-α-olefin copolymer having more than three carbon atoms has been prepared by means of metallocene catalysis.

3. Use of a polyolefin composition according to Claim 1, **characterized in that** the polyolefin mixture comprises not only the ethylene-α-olefin copolymer but also conventional crystalline polyolefins, preferably polypropylene and/or low-pressure polyethylene, in an amount of from 0 to 30 parts by weight per 100 parts by weight of ethylene-α-olefin copolymer.

4. Use of a polyolefin composition according to Claim 1, **characterized in that** the component (B) is selected from the group consisting of calcium carbonates, aluminium and magnesium hydroxides, calcium sulphates, silicates, silicas, carbon blacks, graphites and halogen-containing organic flame retardants such as decabromo(diphenyl ether), octabromo(diphenyl ether), pentabromo-(diphenyl ether), hexabromodiphenoxyethane, tetrabromophthalic anhydride, tetrabromophthalic acid diols and tetrabromophthalic acid polyethers, ethylenebistetrabromophthalimide, tetrabromobisphenol A (TBBA), TBBA bis(2,3-dibromopropyl) ether, TBBA bis(2-hydroxyethyl) ether, TBBA bis(allyl) ether, TBBA bis(2-ethyl ether acrylate), TBBA carbonate oligomers, brominated epoxy resins based on TBBA, poly(dibromophenyl ether), poly(pentabromobenzyl acrylate), poly(tribromostyrene), hexabromocyclododecane, ethylene-bis(dibromonorbonanedicarboximide), dibromoethyldibromocyclohexane, dibromoneopentyl glycol and chlorinated cycloaliphatic compounds such as Dechlorane Plus or HET acid and synergistic combinations of the halogen-containing compounds listed with antimony compounds such as diantimony trioxide.

5. Use of a polyolefin composition according to Claim 1, **characterized in that** the silane-grafted polyolefin mixture is produced in the melt by reaction of organic silanes of the general formula RSiX₃ with the polyolefin mixture in the presence of free-radical-forming components, where R is a polyolefinically unsaturated hydrocarbon radical and X is a hydrolysable organic group.

6. Use of a polyolefin composition according to Claim 5, **characterized in that** the organic silane of the general formula RSiX₃ is selected from the group consisting of vinyltrimethoxysilane, vinyltriethoxysilane and gamma-(meth)acryloxypropyltrimethoxysilane.

7. Use of a polyolefin composition according to Claim 5, **characterized in that** the free-radical-forming component is selected from the group consisting of acyl peroxide, ketone peroxide, hydroperoxide, peroxocarbonate, perester, peroxoketal and peroxooligomers, in particular from the group consisting of alkyl peroxide.

8. Use of a polyolefin composition according to Claim 5, **characterized in that** the free-radical-forming component is an azo compound.

9. Use of a polyolefin composition according to Claim 5, **characterized in that** the free-radical-forming component is an organic alkyl peroxide which has a half-life of 0.1 hour at temperatures of > 80°.

10. Use of a polyolefin composition according to Claim 9, **characterized in that** the organic alkyl peroxide is selected from the group consisting of 2,5-dimethyl-2,5-di(tert-butylperoxo)hexane and 2,5-dimethyl-2,5-di(tert-butylperoxo)-3-hexyne and di(tert-butyl) peroxide and 1,3-di(tert-butylperoxoisopropyl)benzene and dicumyl peroxide and tert-butyl cumyl peroxide.

11. Use of a polyolefin composition according to Claim 1, **characterized in that** the gel content of the crosslinked, heat-shrinkable polyolefin composition is in the range from 1 to 90%, preferably from 20 to 80%.

12. Use of a polyolefin composition according to any of the preceding claims, **characterized in that** 0-100 parts by weight of additives, based on the sum of the components A and B, are added in the form of 0-5 parts by weight of lubricants or processing aids, 0-2 parts by weight of nucleating agents, 0-1 part by weight of stabilizers, 0-2 parts by weight of antistatics, 0-100 parts by weight of process oil, 0-5 parts by weight of pigments and/or 0-3 parts by weight of blowing agents.

13. Use of a polyolefin composition according to any of the preceding claims, **characterized in that** a catalyst or a catalyst mixture is added to accelerate the crosslinking reaction.

14. Use of a polyolefin composition according to Claim 13, **characterized in that** the catalyst is selected from the group consisting of dibutyltin dilaurate, dibutyltin oxide, tin octoate, dibutyltin maleate and titanyl acetonate.

15. Use of a polyolefin composition according to any of the preceding claims, **characterized in that** the grafting reaction of the polyolefin composition with the silane and shaping are carried out in one processing step using a single-screw extruder having a barrier screw as processing apparatus.

16. Use of a polyolefin composition according to any of the above claims for producing heat-shrinkable tubing, in particular ones provided with flame retardant, with adhesive coatings, with a shrink start temperature of < 60°C, for components having extremely different diameters, for heat-shrinkable tubing having a high abrasion resistance and the capability of conducting away electrostatic charges for use in, in particular, the electrical industry, in mechanical engineering and in toolmaking and in building and construction.

## Revendications

1. Utilisation d'une composition polyoléfinique thermorétractable réticulée, constituée d'au moins les deux composants suivants :
(I) 100 parties en poids d'un composant (A), constitué d'un mélange de polyoléfines greffées sur silane, dont au moins un constituant de mélange est un copolymère éthylène-α-oléfine ayant plus de trois atomes de carbone, dont l'indice de fusion est > 3,0 g pour 10 min à 190°C / 2,16 kg, dont la distribution du poids moléculaire M_{w}/Mₙ est comprise entre 1,5 et 3,5 et dont le point de fusion est inférieur à 100°C,
(II) 0 à 400 parties en poids d'un composant (B), constitué d'une ou de plusieurs charges inorganiques et/ou d'un ou plusieurs ignifugeants halogénés et/ou ignifugeants synergiques à base de composés de l'antimoine et halogénés,
pour la production de tubes thermorétractables.

2. Utilisation d'une composition polyoléfinique selon la revendication 1, **caractérisée en ce que** le copolymère éthylène-α-oléfine ayant plus de trois atomes de carbone a été préparé au moyen d'une catalyse par métallocène.

3. Utilisation d'une composition polyoléfinique selon la revendication 1, **caractérisée en ce que** le mélange polyoléfinique comprend, en plus du copolymère éthylène-α-oléfine, des polyoléfines cristallines traditionnelles, de préférence un polypropylène et/ou un polyéthylène à faible pression, en une quantité comprise entre 0 et 30 parties en poids, par rapport à 100 parties en poids de copolymère éthylène-α-oléfine.

4. Utilisation d'une composition polyoléfinique selon la revendication 1, **caractérisée en ce que** le composant (B) est choisi parmi le groupe constitué de carbonates de calcium, d'hydroxydes d'aluminium ou de magnésium, de sulfates de calcium, de silicates, de silices, de noirs de carbone, de graphites et/ou d'agents anti-inflammation organiques halogénés tels que le déca-, l'octa-, le pentabromodiphényléther, l'hexabromodiphénoxyéthane, l'anhydride tétrabromophtalique, des diols et des polyéthers d'acide tétrabromophtalique, l'éthylènebistétrabromophtalimide, le tétrabromobisphénol A (TBBA), le TBBA-bis(2,3-dibromopropyléther), le TBBA-bis(2-hydroxyéthyléther), le TBBA-bis(allyléther), le TBBA-bis(2-éthylétheracrylate), des oligomères de TBBA-carbonate, des résines époxy bromées à base de TBBA, un poly(dibromophényléther), un poly(acrylate de pentabromobenzyle), un poly(tribromostyrène), l'hexabromocyclododécane, l'éthylène-bis(dibromonorbornanedicarboximide), le dibromoéthyldibromocyclohexane, le dibromonéopentylglycol et/ou des composés cycloaliphatiques chlorés tels que le Dechlorane Plus ou l'acide HET et/ou des combinaisons synergiques des composés halogénés énumérés avec des composés de l'antimoine tels que le trioxyde de diantimoine.

5. Utilisation d'une composition polyoléfinique selon la revendication 1, **caractérisée en ce que** le mélange de polyoléfines greffées sur silane est produit à l'état fondu par réaction de silanes organiques de formule générale RSiX₃ avec le mélange de polyoléfines en présence de composants formant des radicaux, où R est un radical hydrocarboné polyoléfiniquement insaturé et X est un groupe organique hydrolysable.

6. Utilisation d'une composition polyoléfinique selon la revendication 5, **caractérisée en ce que** le silane organique de formule générale RSiX₃ est choisi parmi le groupe constitué du vinyltriméthoxysilane, du vinyltriéthoxysilane ou du gamma-(méth)acryloxypropyltriméthoxysilane.

7. Utilisation d'une composition polyoléfinique selon la revendication 5, **caractérisée en ce que** le composant formant des radicaux est choisi parmi le groupe constitué d'un peroxyde d'acyle, d'un peroxyde de cétone, d'un hydroperoxyde, d'un peroxocarbonate, d'un perester, d'un peroxocétal et/ou de peroxo-oligomères, en particulier parmi le groupe constitué d'un peroxyde d'alkyle.

8. Utilisation d'une composition polyoléfinique selon la revendication 5, **caractérisée en ce que** le composant formant des radicaux est un composé azoïque.

9. Utilisation d'une composition polyoléfinique selon la revendication 5, **caractérisée en ce que** le composant formant des radicaux est un peroxyde d'alkyle organique, présentant une demi-vie de 0,1 heure à des températures > 80°.

10. Utilisation d'une composition polyoléfinique selon la revendication 9, **caractérisée en ce que** le peroxyde d'alkyle organique est choisi parmi le groupe constitué du 2,5-diméthyl-2,5-di(tert-butylperoxo)hexane et/ou du 2,5-diméthyl-2,5-di(tert-butylperoxo)-3-hexyne et/ou du peroxyde de di(tert-butyl) et/ou du 1,3-di(tert-butylperoxoisopropyl)benzène et/ou du peroxyde de dicumyle et/ou du peroxyde de tert-butylcumyle.

11. Utilisation d'une composition polyoléfinique selon la revendication 1, **caractérisée en ce que** la teneur en gel de la composition polyoléfinique thermorétractable réticulée est dans la plage comprise entre 1 et 90 %, de préférence entre 20 et 80 %.

12. Utilisation d'une composition polyoléfinique selon l'une quelconque des revendications précédentes, **caractérisée en ce que** l'on effectue l'addition de 0 à 100 parties en poids d'additifs, par rapport à la somme des composants A et B, sous la forme de 0 à 5 parties en poids de lubrifiants ou d'auxiliaires de mise en oeuvre, de 0 à 2 parties en poids d'agents de nucléation, de 0 à 1 partie en poids de stabilisateurs, de 0 à 2 parties en poids d'agents antistatiques, de 0 à 100 parties en poids d'huile de traitement, de 0 à 5 parties en poids de pigments et/ou de 0 à 3 parties en poids d'agents porophores.

13. Utilisation d'une composition polyoléfinique selon l'une quelconque des revendications précédentes, **caractérisée en ce que** l'on effectue l'addition d'un catalyseur ou d'un mélange de catalyseurs pour accélérer la réaction de réticulation.

14. Utilisation d'une composition polyoléfinique selon la revendication 13, **caractérisée en ce que** le catalyseur est choisi parmi le groupe constitué du dilaurate de dibutylétain, de l'oxyde de dibutylétain, de l'octoate d'étain, du maléate de dibutylétain ou du l'acétonate de titanyle.

15. Utilisation d'une composition polyoléfinique selon l'une quelconque des revendications précédentes, **caractérisée en ce que** la réaction de greffage de la composition polyoléfinique avec le silane d'une part, et la mise en forme d'autre part, sont effectuées dans une étape de mise en oeuvre en utilisant une extrudeuse mono-vis avec une vis barrière en tant qu'unité de mise en oeuvre.

16. Utilisation d'une composition polyoléfinique selon l'une quelconque des revendications précédentes pour la production de tubes thermorétractables, en particulier ceux avec un apprêt ignifuge, avec des revêtements adhésifs, avec un début de retrait à < 60°C, pour des composants présentant des diamètres extrêmement différents, pour des tubes thermorétractables présentant une haute résistance à l'abrasion et la capacité de conduction de charges électrostatiques pour une utilisation, en particulier, dans l'industrie électrique, dans la construction des machines, dans la fabrication des outils et dans le bâtiment.
